# FASCICULE DE BREVET EUROPEEN

(11) **EP 1 912 917 B1**
(45) Date de publication et mention de la délivrance du brevet: **26.05.2010**
(21) Numéro de dépôt: 06794483.5
(22) Date de dépôt: 19.07.2006
(51) Int. Cl.: C04B 35/52

(54) **SUPPORT DE CUISSON POUR CERAMIQUES ET PROCEDE D'OBTENTION**
BRENNUNTERSTÜTZUNG FÜR KERAMIKARTIKEL UND VERFAHREN ZU DEREN HERSTELLUNG
FIRING SUPPORT FOR CERAMICS AND METHOD FOR OBTAINING SAME

(30) Priorité: 28.07.2005 FR 0552356
(43) Date de publication de la demande: 23.04.2008
(73) Titulaire: Saint-Gobain Centre de Recherches et d'Etudes Européen, 92400 Courbevoie (FR)
(72) Inventeur: SCHUMANN, Matthias, F-84300 Cavaillon (FR); SCALABRINO, Mattéo, 230-20016 Pero (MI) (IT); QUELLMAZ, Kerstin, 08134 Wildenfels (DE); DUSSAULX, Michel, 96472 Rödental (DE)
(74) Mandataire: Teyssedre, Laurent
(86) Numéro de dépôt international: PCT/FR2006/050729
(87) Numéro de publication internationale: WO 2007/012775

(56) Documents cités:
- US-A- 3 925 577
- US-A- 5 536 574
- US-A- 5 545 484

## Description

La présente invention se rapporte à un support pour la cuisson de pièces en céramique, notamment en carbure de silicium. Elle concerne plus particulièrement un support en carbone revêtu par du carbure de silicium ainsi que le procédé d'obtention d'un tel support.

Lors du frittage, les pièces en céramiques doivent en général subir des étapes de cuisson à très haute température, notamment à plus de 1500°C, voire plus de 2000°C. Des supports adaptés à ces températures élevées sont employés et choisis parmi les matériaux les plus réfractaires. Une résistance au choc thermique élevée est également une propriété indispensable pour l'application d'un matériau en tant que support de cuisson. Le carbone, en particulier sous sa forme graphite, est ainsi employé du fait de sa température de fusion extrêmement élevée, à plus de 3000°C. Les propriétés autolubrifiantes du graphite, dues à la faiblesse des liaisons entre les atomes de carbone de deux couches successives sont également appréciées dans ce type d'application car elles permettent généralement d'éviter ou au moins de limiter le collage avec le matériau à fritter.

Des phénomènes de collage à haute température entre le graphite et certains matériaux céramiques tels que le carbure de silicium (SiC) ont toutefois été observés, en particulier pour des températures de cuisson dépassant 1800°C, conduisant à une diminution du rendement, le décollement, outre le temps utilisé à cette manoeuvre, étant susceptible d'endommager la pièce en céramique et/ou le support en graphite.

L'invention a pour but d'obvier à ces inconvénients en proposant un nouveau type de support de cuisson pour céramiques.

L'invention a pour objet un support de cuisson pour céramiques formé d'un substrat en carbone au moins partiellement recouvert d'un revêtement à base de carbure de silicium (SiC) majoritairement cristallisé sous la forme alpha (α-SiC), ledit revêtement étant en outre adhérent audit substrat.

Il est en effet apparu aux inventeurs que le contact entre les pièces céramiques à cuire, en particulier en carbure de silicium, et un support présentant une surface elle-même en carbure de silicium ne générait aucun collage, même à des températures aussi élevées que 1800°C. Ce résultat est particulièrement surprenant, car il était plutôt attendu que la similitude chimique entre le support et la pièce à cuire ait pour conséquence, lors de la cuisson, un frittage entraînant un collage irrémédiable entre ces deux éléments. Le carbure de silicium du revêtement du support selon l'invention est cristallisé sous la forme alpha, cette forme présentant les plus fortes résistances chimiques.

Par revêtement il faut entendre au sens de la présente invention une couche déposée sur le substrat et formant donc une surépaisseur par rapport audit substrat.

Pour éviter tout collage, le revêtement à base de carbure de silicium contient avantageusement au moins 90% en masse de carbure de silicium. Il est même de préférence constitué de carbure de silicium pur ou presque pur, sauf impuretés inévitables. La couche de SiC peut toutefois contenir d'autres carbures, tels que par exemple le carbure de bore B₄C, à des teneurs ne dépassant pas 10%, voire 5%. La couche de SiC ne contient de préférence pas d'alumine (Al₂O₃) ou de zircone (ZrO₂), d'une part du fait du désaccord entre leur coefficient de dilatation (de l'ordre de 7,5 à 8,5.10⁻⁶/°C) et celui du carbone ou du SiC (de l'ordre de 4 à 5.10⁻⁶/°C) qui génère des contraintes thermomécaniques entre le substrat et le revêtement et donc une faible adhésion, et d'autre part du fait que ces oxydes réagissent chimiquement avec le carbure de silicium. La zircone peut par exemple être réduite par le carbure de silicium, occasionnant des fissures dans le revêtement. L'alumine est quant à elle susceptible de réagir avec le carbure de silicium, conduisant à la formation de phases secondaires instables à haute température.

Le revêtement à base de carbure de silicium présente de préférence une porosité comprise entre 10 et 65%, de préférence entre 30 et 50%. Les inventeurs ont en effet observé que cette plage de porosité permettait d'obtenir une résistance au choc thermique élevée, particulièrement appréciable pour l'application en tant que support de cuisson, tout en n'amoindrissant pas les performances en terme de collage avec la pièce céramique à cuire.

Le revêtement selon l'invention présente de préférence une microstructure dans laquelle des particules de carbure de silicium sont liées entre elles par des ponts eux-mêmes en carbure de silicium.

L'épaisseur du revêtement à base de carbure de silicium est de préférence supérieure ou égale à 500 micromètres, notamment à 1 millimètre, afin de conférer au revêtement une bonne stabilité dimensionnelle.

Le substrat en carbone est avantageusement sous la forme graphite, notamment du type isotrope.

L'invention a également pour objet un procédé de fabrication d'un tel support, et en particulier un procédé de dépôt d'un revêtement à base de SiC sur un substrat en carbone, de préférence sous la forme graphite, comprenant au moins une étape de dépôt de particules de carbure de silicium (SiC) comme précurseur majoritaire de silicium suivie d'au moins une étape de cuisson à une température comprise entre 2100°C et 2450°C sous atmosphère non-oxydante.

Ce procédé permet d'obtenir un revêtement à base de carbure de silicium dont la porosité est comprise entre 10 et 65%, notamment entre 30 et 50%, particulièrement adhérent au substrat en carbone et présentant de bonnes propriétés de résistance chimique et à l'abrasion.

Par « précurseur de silicium » au sens de la présente invention, il faut comprendre tout corps (métal, oxyde, carbure, halogénure, nitrure, composé organométallique et....) permettant d'incorporer des atomes de silicium dans le revêtement. Des précurseurs de silicium peuvent être par exemple le métal Si, l'oxyde SiO₂, le carbure SiC, l'halogénure SiCl₄. Par précurseur « majoritaire », il faut comprendre que parmi les précurseurs employés pour incorporer des atomes de silicium dans le revêtement, le carbure de silicium est celui présent en la plus grande teneur massique.

Afin d'améliorer les propriétés de résistance à l'abrasion de pièces en mouvement, il est connu de déposer des couches minces de carbure de silicium sur des pièces en graphite de forme complexe, tels que des tubes, par le procédé CVD (dépôt chimique en phase vapeur ou « Chemical Vapour Deposition ») à partir de précurseurs gazeux de silicium tels que SiCl₄. Ce procédé ne permet toutefois pas d'obtenir une adhésion satisfaisante entre le substrat de carbone et le carbure de silicium.

La résistance aux chocs thermiques des pièces revêtues de carbure de silicium par CVD est en outre trop faible, en tout état de cause insuffisante pour une application en tant que support de cuisson pour céramiques. Les inventeurs ont mis en évidence le fait que cette faible résistance au choc thermique pouvait être attribuée à la forte densité (faible porosité) des revêtements formés par CVD.

Il existe également des procédés, appelés « CVR » (pour « Chemical Vapour Reaction ») dans lesquels du silicium métallique (Si), utilisé comme précurseur de silicium, est déposé sous forme de barbotine ou par CVD sur un substrat en graphite puis cuite vers 1600°C. Le silicium se liquéfiant pénètre dans les pores du graphite, une couche superficielle de la pièce en graphite étant enrichie en carbure de silicium, et possédant par conséquent une résistance à l'abrasion plus élevée que celle du graphite. Le matériau obtenu par ce type de procédés est un composite dans lequel la couche supérieure du graphite est convertie en graphite contenant des particules de carbure de silicium. Il ne s'agit donc pas d'un matériau en carbone présentant un revêtement à base de carbure de silicium, au sens où le mot « revêtement » est compris dans le cadre de la présente invention.

Ce type de procédé a déjà été employé pour créer une couche supérieure du graphite présentant une bonne adhésion avec du carbure de silicium déposé ultérieurement par CVD et ainsi résoudre le problème technique susmentionné de faible adhésion entre le carbone et le carbure de silicium déposé par CVD. Les brevets US 5 545 484 et US 3 925 577 décrivent par exemple un procédé en deux étapes : lors de la première étape, une couche de silicium est déposée sur un support en graphite puis chauffée de manière à ce que le silicium pénètre dans les pores de la partie superficielle du graphite et forme dans ces pores du carbure de silicium ; dans une seconde étape, du carbure de silicium est déposé au-dessus de cette partie superficielle par CVD. Dans ce procédé complexe, la première étape est nécessaire pour obtenir une couche de carbure de silicium adhérant suffisamment au substrat en carbone. Le dépôt du revêtement de carbure de silicium par CVD étant réalisé à des températures de l'ordre de 1400°C à 1600°C, le carbure de silicium obtenu ne peut pas être cristallisé sous la forme alpha, même partiellement.

Il est également connu du brevet US 5 536 574 un procédé appelé « pack cementation », dans lequel la partie superficielle du substrat en carbone est convertie en carbure de silicium. Il ne s'agit donc pas d'un procédé de dépôt d'un revêtement à base de carbure de silicium, puisque le carbure de silicium obtenu ne forme pas une surépaisseur par rapport au substrat de carbone initial. Ce procédé met en oeuvre un contact intime entre le substrat en carbone et un mélange de particules de carbure de silicium, d'alumine et de silicium et un chauffage de l'ensemble à des températures comprises entre 1370 et 1650°C. Le précurseur majoritaire du silicium est ici du carbure de silicium mais, compte tenu des températures impliquées, le carbure de silicium formé ne peut pas être sous forme alpha.

Le procédé selon l'invention se distingue donc des procédés connus en ce qu'il est plus simple et en ce qu'il permet d'obtenir un revêtement adhérent à base de carbure de silicium cristallisé sous la forme alpha, dont la porosité est comprise entre 10 et 65%, le précurseur majoritaire du silicium étant lui-même du carbure de silicium. Aux températures supérieures ou égales à 2100°C, les particules de carbure de silicium recristallisent pour former une couche à base de SiC sous forme alpha (α-SiC), présentant une porosité adéquate, homogène et adhérente au substrat de graphite sous-jacent. Le revêtement obtenu par ce procédé présente une microstructure dans laquelle des particules de carbure de silicium sont liées entre elles par des ponts eux-mêmes en carbure de silicium.

L'atmosphère non-oxydante (neutre ou réductrice) est impérative afin d'éviter toute oxydation du carbure de silicium. La cuisson est de préférence réalisée sous atmosphère neutre, notamment sous argon.

Selon un mode de réalisation préféré conduisant à une amélioration de l'adhésion entre le revêtement et le substrat, les composés Si et/ou SiO₂ sont en outre employés comme précurseurs de silicium, le précurseur majoritaire étant toujours SiC.

Il est en particulier préféré que les uniques précurseurs de silicium soient les éléments ci-après dans les proportions massiques suivantes, rapportées à la masse totale de précurseurs de silicium :

| | |
|---|---|
| SiC | 70 à 100% |
| Si | 0 à 25% |
| SiO₂ | 0 à 10% |

Cette famille de composition présente en effet un optimum d'adhésion entre le revêtement à base de carbure de silicium et le substrat en carbone.

Une porosité particulièrement appropriée est obtenue lorsque 40 à 80% en masse des particules de SiC présentent un diamètre supérieur ou égal à 10 micromètres, le diamètre médian de cette fraction granulométrique étant de moins de 300 micromètres. Une trop forte proportion de fines particules a en outre pour conséquence une baisse de la résistance mécanique, notamment l'apparition de fissures à la cuisson.

Les précurseurs de silicium, sous forme pulvérulente, peuvent être directement déposés sur le substrat de carbone sous forme de lits de poudres. Pour des facilités de mise en forme, ils sont toutefois avantageusement apportés par le biais d'une barbotine ou d'une pâte, le solvant étant alors de préférence de l'eau. La quantité d'eau est à ajuster en fonction de la viscosité de la pâte ou de la barbotine. Une barbotine contenant entre 10 et 20% de la masse totale de précurseurs de silicium est préférée pour des raisons de facilité de mise en oeuvre.

La barbotine ou la pâte contient avantageusement et en outre un ou plusieurs composés choisis parmi des agents défloculants tels que des silicates alcalins (notamment les silicates de sodium), des liants tels que le polyvinylalcool (PVA), des plastifiants tels que polyéthylène glycol (PEG), la teneur massique totale en ces composés ne dépassant pas 5%, notamment 2% de la masse totale de précurseurs de silicium.

Divers procédés de dépôt de la barbotine ou de la pâte sur le substrat de carbone sont envisageables, tels le dépôt à la raclette, à la truelle, au pinceau ou encore par pulvérisation.

La masse de barbotine déposée, ajustée en fonction de l'épaisseur de revêtement souhaitée est de préférence comprise entre 10 et 200mg de matière sèche par cm² de substrat. Des quantités de 20 à 80mg/cm² sont préférées.

Le procédé selon l'invention comprend de préférence une étape de séchage préalable à la cuisson. Cette étape de séchage permet avantageusement de diminuer la quantité d'eau liée à moins de 1% de la masse du revêtement. Le séchage comprend de préférence deux étapes, l'une à température ambiante et sous air pendant une durée allant de 2 heures à 24 heures, la seconde en étuve à une température allant de 100°C à 200°C pendant une durée de 2 heures à 12 heures. Un séchage ou un étuvage par micro-ondes est également possible.

L'épaisseur du revêtement est ajustée grâce à la quantité de barbotine déposée, ou alternativement à l'aide de plusieurs cycles de dépôt et de recuit.

L'étape de cuisson comprend de préférence une montée en température selon une rampe de 5 à 50°C/minute, puis un palier d'une durée pouvant aller de 5 minutes à 5 heures à la température maximale, comprise entre 2100°C et 2450°C.

L'invention a également pour objet un support de cuisson pour céramiques susceptible d'être obtenu par le procédé selon l'invention.

L'invention a enfin pour objet l'utilisation d'un support de cuisson selon l'invention pour la cuisson de pièces en carbure de silicium (SiC) à plus de 1800°C.

L'invention sera mieux comprise à la lecture des exemples de réalisation suivants, illustrant l'invention sans pour autant la limiter.

### EXEMPLE 1 :

Un support de cuisson en carbone de type graphite isotrope, de densité 1,74 et présentant une porosité de 12% est revêtu par du carbure de silicium selon le procédé décrit ci-après.

### - Préparation de la barbotine à base de SiC

Des particules de carbure de silicium de pureté supérieure à 98% et présentant une granulométrie telle que 70% en masse des particules présente un diamètre supérieur à 10 micromètres, le diamètre médian de cette fraction granulométrique étant inférieur à 300 micromètres sont malaxées pendant 15 minutes avec de l'eau distillée, du silicate de sodium et de la fumée de silice (SiO₂) de diamètre médian inférieur à 1 micromètre.

Au mélange obtenu sont ajoutées une solution aqueuse à 15% de polyvinylalcool (PVA) et une solution aqueuse à 10% de polyéthylèneglycol (PEG). Un malaxage de 10 minutes environ permet d'obtenir une barbotine homogène dont le pH est d'environ 9 et le taux d'humidité de 18%.

La barbotine contient comme précurseurs de silicium à la fois du carbure de silicium (SiC) pour 90% en masse et de la silice (SiO₂) pour 10% en masse, ces pourcentages étant relatifs à la quantité totale de précurseurs de silicium dans le revêtement. A ces précurseurs, la quantité d'eau ajoutée est de 15% en masse, le silicate de sodium étant ajouté à hauteur de 0,8%, la solution de PVA à hauteur de 0,5% et la solution de PEG également à hauteur de 0,5%. Tous les pourcentages indiqués sont relatifs à la quantité massique totale de précurseurs du silicium.

### - Dépôt et cuisson de la barbotine

La barbotine est déposée sur le substrat en graphite à l'aide d'une raclette, en une quantité d'environ 40mg de matière sèche par cm².

Un séchage d'une durée de 12 heures est effectué à température ambiante et sous air, suivi d'une étape de séchage en étuve à 120°C pendant 6 heures environ.

La cuisson de la barbotine a ensuite lieu dans un four sous atmosphère d'argon à une température supérieure à 2100°C. L'étape de cuisson comprend une étape de montée en température à une vitesse de 10°C/minute suivie d'une étape de palier à la température maximale pendant 2 heures.

Le revêtement obtenu présente une épaisseur d'environ 500 micromètres et une parfaite adhésion au substrat en graphite. Le SiC est cristallisé sous la forme alpha.

### EXEMPLE 2 :

Cet exemple de réalisation ne se distingue du précédent que par la composition des précurseurs de silicium utilisés pour la formation du revêtement, les particules de SiC représentant 75% en masse des précurseurs, l'autre précurseur étant de la poudre de silicium (Si) dont le diamètre médian est de 4 micromètres et dont la pureté est supérieure à 98,5%.

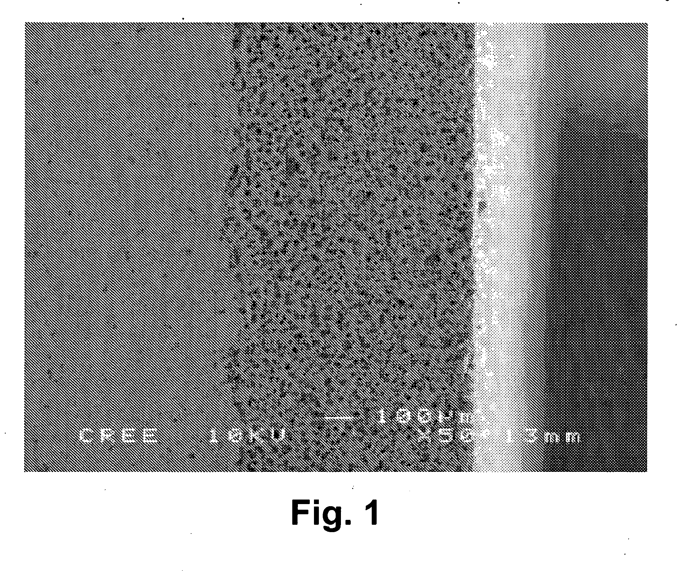

La figure 1 illustre la microstructure du revêtement obtenu. Il s'agit d'un cliché de microscopie électronique à balayage (MEB) montrant dans sa partie la plus à gauche le substrat de graphite (non-poreux) et au centre le revêtement de carbure de silicium (poreux) formant une surépaisseur sur le substrat. L'interface est quant à elle très nette, témoignant d'une très faible interdiffusion entre le substrat et le revêtement.

### EXEMPLE 3 (COMPARATIF) :

Dans cet exemple comparatif, aucun revêtement n'est formé sur le substrat en graphite.

### TEST DE COLLAGE

Un échantillon en carbure de silicium est déposé sur le support selon l'invention (exemples 1 et 2) ou sur le support en graphite (exemple 3), l'ensemble étant ensuite porté à 1900°C sous atmosphère d'argon.

Après cette étape de cuisson, l'observation du collage est à la fois visuelle (observation d'une éventuelle zone de réaction entre le support et la pièce cuite) et tactile (ressenti d'une résistance lors du retrait de la pièce avec la main).

Dans le cas de l'exemple 3, une zone de réaction est observée au niveau de la zone de contact entre le support en graphite et la pièce en SiC, et une résistance est perçue lors de la séparation de ces deux éléments.

En revanche, aucun commencement de collage n'est observé dans le cas où le support employé est un support selon les exemples 1 et 2.

L'invention présente donc l'avantage d'obtenir un support de cuisson parfaitement stable et inerte vis-à-vis de céramiques telles que le carbure de silicium pour des températures de cuisson de 1800°C ou plus.

La description qui précède permet d'illustrer quelques modes possibles de réalisation de l'invention. Il est bien entendu que cette description n'est cependant pas limitative et que l'homme du métier est à même de réaliser d'autres variantes de l'invention sans pour autant sortir de son cadre.

## Revendications

1. Support de cuisson pour céramiques formé d'un substrat en carbone au moins partiellement recouvert d'un revêtement à base de carbure de silicium (SiC), ledit revêtement étant en outre adhérent audit substrat, **caractérisé en ce que** le carbure de silicium est majoritairement cristallisé sous forme alpha (α-SiC).

2. Support selon l'une des revendications précédentes, tel que le revêtement à base de carbure de silicium contient au moins 90% de carbure de silicium.

3. Support selon l'une des revendications précédentes, tel que l'épaisseur du revêtement à base de carbure de silicium est supérieure ou égale à 500 micromètres, de préférence à 1 millimètre.

4. Support selon l'une des revendications précédentes, tel que le revêtement à base de carbure de silicium présente une porosité comprise entre 10 et 65%, de préférence entre 30 et 50%.

5. Support selon l'une des revendications précédentes, tel que le substrat en carbone est sous la forme graphite, notamment du type isotrope.

6. Procédé de dépôt d'un revêtement à base de SiC sur un substrat en carbone, comprenant au moins une étape de dépôt de particules de carbure de silicium (SiC) comme précurseur majoritaire de silicium suivie d'au moins une étape de cuisson à une température comprise entre 2100°C et 2450°C sous atmosphère non-oxydante.

7. Procédé selon la revendication précédente, tel que le substrat en carbone est de forme graphite.

8. Procédé selon l'une des revendications de procédé précédentes, tel que l'atmosphère lors de la cuisson est neutre.

9. Procédé selon l'une des revendications de procédé précédentes, tel que Si et/ou SiO₂ sont en outre employés comme précurseurs de silicium.

10. Procédé selon l'une des revendications de procédé précédentes, tel que les uniques précurseurs de silicium sont les éléments ci-après dans les proportions massiques suivantes, rapportées à la masse totale de précurseurs de silicium :
| | |
|---|---|
| SiC | 70 à 100% |
| Si | 0 à 25% |
| SiO₂ | 0 à 10% |

11. Procédé selon l'une des revendications de procédé précédentes, tel que 40 à 80% en masse des particules de SiC présentent un diamètre supérieur ou égal à 10 micromètres, le diamètre médian de cette fraction granulométrique étant inférieur ou égal à 300 micromètres.

12. Procédé selon l'une des revendications de procédé précédentes, tel que les précurseurs de silicium sont apportés par le biais d'une barbotine ou d'une pâte aqueuses.

13. Procédé selon la revendication précédente, tel que la barbotine ou la pâte contient en outre un ou plusieurs composés choisis parmi des agents défloculants tels que des silicates alcalins, des liants tels que le polyvinylalcool (PVA), des plastifiants tels que polyéthylène glycol (PEG), la teneur massique totale en ces composés ne dépassant pas 5% de la masse totale de précurseurs de silicium.

14. Utilisation d'un support de cuisson selon l'une des revendications de support précédentes pour la cuisson de pièces en carbure de silicium (SiC) à plus de 1800°C.

## Claims

1. A firing support for ceramics formed from a carbon substrate at least partially covered by a coating based on silicon carbide (SiC), said coating additionally adhering to said substrate, **characterized in that** the silicon carbide is mainly crystallized in alpha form (α-SiC).

2. The support as claimed in the preceding claim, such that the coating based on silicon carbide contains at least 90% silicon carbide.

3. The support as claimed in one of the preceding claims, such that the thickness of the coating based on silicon carbide is greater than or equal to 500 microns, preferably greater than or equal to 1 millimeter.

4. The support as claimed in one of the preceding claims, such that the coating based on silicon carbide has a porosity between 10 and 65%, preferably between 30 and 50%.

5. The support as claimed in one of the preceding claims, such that the carbon substrate is in the form of graphite, especially of the isotropic type.

6. A process for depositing a coating based on SiC onto a carbon substrate, comprising at least one step of depositing particles of silicon carbide (SiC) as the main precursor of silicon followed by at least one step of firing at a temperature between 2100°C and 2450°C under a nonoxidizing atmosphere.

7. The process as claimed in the preceding claim, such that the carbon substrate is of graphite form.

8. The process as claimed in one of the preceding process claims, such that the atmosphere during firing is neutral.

9. The process as claimed in one of the preceding process claims, such that Si and/or SiO₂ are additionally used as silicon precursors.

10. The process as claimed in one of the preceding process claims, such that the only silicon precursors are the components below in the following proportions by weight, relative to the total weight of silicon precursors:
| | |
|---|---|
| SiC | 70 to 100%; |
| Si | 0 to 25%; |
| SiO₂ | 0 to 10%. |

11. The process as claimed in one of the preceding process claims, such that 40 to 80 wt% of the SiC particles have a diameter greater than or equal to 10 microns, the median diameter of this particle size fraction being less than or equal to 300 microns.

12. The process as claimed in one of the preceding process claims, such that the silicon precursors are introduced by means of an aqueous slip or slurry.

13. The process as claimed in the preceding claim, such that the slip or slurry additionally contains one or more compounds chosen from deflocculants such as alkali metal silicates, binders such as polyvinyl alcohol (PVA), plasticizers such as polyethylene glycol (PEG), the total weight content of these compounds not exceeding 5% of the total weight of silicon precursors.

14. The use of a firing support as claimed in one of the preceding support claims, for firing parts made of silicon carbide (SiC) at above 1800°C.

## Patentansprüche

1. Brennträger für keramische Werkstoffe, der aus einem Substrat aus Kohlenstoff gebildet ist, das wenigstens teilweise mit einer Beschichtung auf der Basis von Siliciumcarbid (SiC) überzogen ist, die außerdem an diesem Substrat anhaftet, **dadurch gekennzeichnet, dass** das Siliciumcarbid überwiegend in α-Form (α-SiC) kristallisiert ist.

2. Träger nach einem der vorhergehenden Ansprüche derart, dass die Beschichtung auf der Basis von Siliciumcarbid mindestens 90 % Siliciumcarbid enthält.

3. Träger nach einem der vorhergehenden Ansprüche derart, dass die Dicke der Beschichtung auf der Basis von Siliciumcarbid mehr als oder gleich 500 Mikrometer und vorzugsweise mehr als oder gleich 1 Millimeter beträgt.

4. Träger nach einem der vorhergehenden Ansprüche derart, dass die Beschichtung auf der Basis von Siliciumcarbid eine Porosität von 10 bis 65 % und vorzugsweise zwischen 30 und 50 % aufweist.

5. Träger nach einem der vorhergehenden Ansprüche derart, dass das Substrat aus Kohlenstoff in Form von insbesondere isotropem Graphit vorliegt.

6. Verfahren zum Aufbringen einer Beschichtung auf der Basis von SiC auf ein Substrat aus Kohlenstoff, welches mindestens eine Stufe zum Aufbringen von Teilchen aus Siliciumcarbid (SiC) als überwiegend Silicium enthaltender Vorläufer, gefolgt von mindestens einer Brennstufe bei einer Temperatur von 2100 bis 2450 °C in einer nichtoxidierenden Atmosphäre, umfasst.

7. Verfahren nach dem vorhergehenden Anspruch derart, dass das Substrat aus Kohlenstoff in Form von Graphit vorliegt.

8. Verfahren nach einem der vorhergehenden Verfahrensansprüche derart, dass die Atmosphäre während des Brennvorgangs neutral ist.

9. Verfahren nach einem der vorhergehenden Verfahrensansprüche derart, dass außerdem Si und/oder SiO₂ als Siliciumvorläufer verwendet wird/werden.

10. Verfahren nach einem der vorhergehenden Verfahrensansprüche derart, dass die alleinigen Siliciumvorläufer die folgenden Stoffe mit nachstehenden Anteilen, bezogen auf die Gesamtmasse der Siliciumvorläufer, sind:
| | | |
|---|---|---|
| SiC | 70 bis | 100 % |
| Si | 0 bis | 25 % |
| SiO₂ | 0 bis | 10 %. |

11. Verfahren nach einem der vorhergehenden Verfahrensansprüche derart, dass 40 bis 80 Masse-% der SiC-Teilchen einen Durchmesser von größer als oder gleich 10 Mikrometer aufweisen, wobei der mittlere Durchmesser dieser Korngrössenfraktion weniger als oder gleich 300 Mikrometer beträgt.

12. Verfahren nach einem der vorhergehenden Verfahrensansprüche derart, dass die Siliciumvorläufer über einen wässrigen Schlicker oder eine wässrige Masse zugeführt werden.

13. Verfahren nach dem vorhergehenden Anspruch derart, dass der Schlicker oder die Masse außerdem eine oder mehrere Verbindungen enthält, die aus Verflüssigungsmitteln wie Alkalisilicaten, Bindemitteln wie Polyvinylalkohol (PVA) und Plastifizierungsmitteln wie Polyethylenglykol (PEG) ausgewählt sind, wobei die Gesamtmasse dieser Verbindungen 5 % der Gesamtmasse der Siliciumvorläufer nicht übersteigt.

14. Verwendung eines Brennträgers nach einem der vorhergehenden Trägeransprüche für das Brennen von Teilen aus Siliciumcarbid (SiC) bei über 1800 °C.
